# EUROPEAN PATENT SPECIFICATION

(11) **EP 2 100 209 B1**
(45) Date of publication and mention of the grant of the patent: **15.09.2010**
(21) Application number: 07847613.2
(22) Date of filing: 30.11.2007
(51) Int. Cl.: G06F 3/023

(54) **A KEYBOARD**
TASTATUR
CLAVIER

(30) Priority: 01.12.2006 DK 200601589; 01.12.2006 US 861975 P
(43) Date of publication of application: 16.09.2009
(73) Proprietor: Danmarks Tekniske Universitet, 2800 Kgs. Lyngby (DK)
(72) Inventor: GLÜCKSTAD, Jesper, 2000 Frederiksberg (DK)
(74) Representative: Jakobsen, Gert Hoey
(86) International application number: PCT/EP2007/063097
(87) International publication number: WO 2008/065195

(56) References cited:
- WO-A-94/00809
- WO-A-03/079174
- WO-A-2005/015376
- WO-A-2005/024869
- WO-A-2006/065252
- GB-A- 2 152 437
- GB-A- 2 396 845
- US-A- 4 022 993
- US-A- 5 907 375
- US-A- 6 028 591
- US-A1- 2003 058 223

## Description

The present invention relates to a keyboard e.g. for use with a computer, an electronic game, a musical instrument, a money dispenser, a sales terminal, or another terminal, etc., having labels on the keys that can be changed during operation of the keyboard, e.g. in order to display symbols or icons in the labels that indicate the current functions of the respective keys of the keyboard.

Almost everything relating to today's personal computers are subject to ongoing significant developments. The ongoing development of processor power, the flat screens, and wireless interfaces are evident examples of this development. However, the computer keyboard seems to constitute an exception. The keyboard design has remained largely unchanged since the invention of the typewriter although a few differences from one language to another and a few functional keys arranged in proprietary layouts have been introduced.

Typically, a keyboard for a computer or the like has keys labeled with characters of the English written language. The labels are printed or molded in a predetermined arrangement in the following denoted the keyboard layout. Some European countries have a greater range of characters and vowels than the English language so that keyboards in some countries have some keys with different key positions.

US 6,028,591 discloses a keyboard with a standard alphanumeric set of keys, in addition to various other special use or function keys. A flexible liquid crystal membrane display overlies all of the keyboard keys, thereby obscuring the keys from the operator. The flexible keyboard display includes an array of addressable pixels for generating key identification indicia and instructions on the face of the membrane.

WO 2005/015376 discloses a user interface with a display which can be partially displaced perpendicular to the display surface, and a sub-construction which is arranged below the display and interacts with the display when the display is partially displaced.

It is an object of the present invention to provide a keyboard with an improved versatility.

According to the present invention, the above-mentioned and other objects are fulfilled by a keyboard with a plurality of keys with key switches that are covered by a flexible display for displaying individual labels of the keys, the flexible display being pre-shaped into a non-planar shape to fit on top of the key switches so that each key switch is activated by depressing the area of the flexible display displaying the key label of the key switch in question.

Thus, the keyboard has upper parts that are constituted by the flexible display for displaying individual labels of the keys.

In one embodiment of the invention, each of the keys with labels displayed by the flexible display has a key cap with a transparent top surface, and the flexible display is mounted underneath the key caps for displaying individual labels of the keys viewable through the transparent top surfaces of the respective key caps.

Preferably, each key has a top surface, such as a flat top surface, that does not or substantially does not change its shape when the key is depressed similar to a conventional keyboard with individually depressible keys.

Preferably, each key of the keyboard is displaced when pushed by the user of the keyboard, i.e. a key is depressed when activated by the user.

Preferably, each key switch of the plurality of keys has a substantially non-flexible member with a contact element, and the non-flexible member is arranged to be displaced when the corresponding key is depressed until contact between the contact element and an electric circuit of the keyboard is established. The non-flexible member may be biased with spring means away from its depressed position. The spring means may be a coil spring, a flat spring, a leaf spring, etc.

It is an advantage of the present invention that the keyboard is operated by a user in the same way as a conventional keyboard. For example, a specific type of tactile feed back experienced by the user during use of a particular conventional keyboard may also be provided by a keyboard according to the present invention. The tactile feed back relates to how it feels to depress a key of the keyboard, for example whether a "click" is generated by a key when depressed by the user and how the "click" feels and sounds. Tactile feed back also relates to the size of the linear displacement of the key when depressed by the user, etc.

Preferably, the key switch is neither a dome switch nor a membrane switch.

Further, the various key layouts provided by conventional keyboards may also be provided by the keyboard according to the present invention, for example the user may select a specific keyboard layout by activating respective specific keys of the keyboard either simultaneously and/or in a specific sequence.

In accordance with the invention, the keyboard is provided with a display for displaying the keyboard labels on the top surface of the keys thereby replacing the conventionally fixed key labels with labels that can be changed during operation of the keyboard by appropriate control of the keyboard.

Preferably, the display has the conventional display capabilities known from conventional liquid crystal displays, light emitting diode displays, or plasma displays, e.g. used in television or computer flat screens, making it possible to display almost anything on top of each key of the keyboard and to change whatever is currently displayed in the key label to something else during operation of the keyboard. In this way, key labels may also be animated according to the present invention.

Preferably, the displayed label of a key indicates the current function of the key. For example when the keyboard is used as a typewriter keyboard, the flexible display may display a conventional layout of lower case letters, numbers and other characters used in writing in the country in question. When depressing the "shift"-key, the display changes the labels into upper case letters, numbers, etc, and when depressing the "AltGr"-key, the display changes the labels accordingly. Thus, the user is relieved from the task of remembering which keys to depress in order to type specific graphical symbols. Likewise, when the keyboard is used together with a computer with a word processor utilizing various function keys, the keyboard may display symbols indicating the respective functions of the function keys executed by the word processor upon activation of the respective key. The functions may be changed during operation of the word processor. Preferably, the word processor allows the user to select an appropriate layout of the keyboard, e.g. various layouts of various countries may be selectable and the Dvorak layout may be selectable. Preferably, the word processor allows the user to specify the function of each key of the keyboard thereby creating an individual keyboard layout.

It is an important advantage of the keyboard according to the invention that the layout of the keyboard is easily changed from one alphabet to another and/or from the layout of one country to another. For example, the keyboard according to the invention may display layouts of the European, Japanese, Arabic, Russian, Chinese, etc., alphabet.

Preferably, the keyboard has a single display for displaying the labels of all keys of the keyboard; however the display may be divided into a plurality of separate display units.

Some of the keys of the keyboard may be conventional keys with fixed labels.

Preferably, the display resides on a flexible substrate that is shaped to fit onto a plurality of the key contacts to be depressed by the user during operation of the keyboard.

Several display technologies are presently available that may reside on a flexible substrate. For example, an organic light emitting diode (OLED) display may reside on a flexible substrate, such as a very flexible metallic foil, a flexible polymeric foil, etc. OLEDs can be printed onto flexible substrates in the same way as inks are sprayed onto paper during printing. Since OLEDs can be printed onto any suitable substrate using inkjet printer technology, they can theoretically have a significantly lower cost than LCDs or plasma displays.

An organic light-emitting diode (OLED) is a special type of light-emitting diode in which the emissive layer comprises a thin-film of certain organic compounds. Originally, small molecule organic light emitting diodes (SMOLED), i.e. small organic molecules that emit light when stimulated electrically, were used; however, today's OLEDs typically utilize large polymer molecules for light emission sometimes termed PLED (polymer light emitting diode). PLEDs have the major advantage of being solution processable, and can therefore be applied to substrates using techniques such as ink jet printing. Dendrimer technology may also be applied in OLEDs. Dendrimers is a class of molecules featuring a high degree of branching and which can be designed to offer specific performance characteristics. In particular, in display technologies, dendrimers can be applied to small molecules to give them some of the properties of polymer systems e.g. solution processability.

In a passive matrix OLED (PMOLED), the cathode and anode are arranged in strips perpendicular to each other. The intersections of the cathode and anode make up the pixels where light is emitted. External circuitry applies current to selected strips of anode and cathode, determining which pixels get turned on and which pixels remain off. Again, the brightness of each pixel is proportional to the amount of applied current. Presently, PMOLEDs are most efficient for text and icons and are best suited for small screens (2 to 3 inch screens) such as screens for cell phones, PDAs and MP3 players, etc.

In a Active-matrix OLED (AMOLED), the cathode and anode constitute full layers, but the anode layer overlays a thin film transistor (TFT) array that forms a matrix. The TFT array is the circuitry that determines which pixels get turned on to form an image. AMOLEDs consume less power than PMOLEDs because the TFT array requires less power than external circuitry, so they are efficient for large displays. AMOLEDs also have faster refresh rates suitable for video. Typically, AMOLEDs are use in computer monitors, large screen TVs and electronic signs or billboards.

One of the great benefits of an OLED display over the traditional LCD displays is that OLEDs do not require a backlight to function. This means that they draw far less power and, when powered from a battery, can operate longer on the same charge. It is also known that OLED based display devices can be more effectively manufactured than liquid-crystal and plasma displays.

OLED technology is currently used in commercial applications such as small screens for mobile phones and portable digital music players (MP3 players), car radios and digital cameras and also in high resolution micro-displays for head-mounted displays. Such portable applications favor the high light output of OLEDs for readability in sunlight, combined with their low power drain.

Electrophoretic displays, electro-wetting displays, polymer LCD displays, etc. are other examples of display technologies that may also reside on a flexible substrate.

The display may provide a conventional dot matrix arrangement below each of the transparent key caps.

In accordance with the present invention, the keyboard may be capable of representing every character, number and other symbols of every written language.

Further, the keyboard can also display an indication of the function of function keys used in connection with games and other software programs.

For example, the keyboard may sequentially display certain key labels in a way that guides the user through a certain software program thereby eliminating the need of consulting a manual for the program.

Further, the keyboard may display key labels corresponding to frequently used functions of a word processor, spreadsheet, database, CAD/CAM, etc., thereby facilitating the use of the word processor, spreadsheet, database, CAD/CAM, respectively.

Still further, the label display flexibility of the keyboard according to the present invention may be used to reduce the number of keys in a keyboard for e.g. a mobile phone, a PDA computer, or other portable equipment.

The keyboard according to the present invention may advantageously be utilized in any means of transportation, e.g. a car, train, airplane, ship, spacecraft, etc., e.g. for control of the means of transportation.

Below the invention will be described in more detail with reference to the exemplary embodiments illustrated in the drawing, wherein
Fig. 1 shows schematically an exploded view of a keyboard according to the present invention,
Fig. 2 shows a detail of the keyboard shown in Fig. 1,
Fig. 3 illustrates various uses of the keyboard shown in Fig. 1,
Fig. 4 illustrates further uses of the keyboard shown in Fig. 1,
Fig. 5 illustrates still further uses of the keyboard shown in Fig. 1.

The present invention will now be described more fully hereinafter with reference to the accompanying drawings, in which exemplary embodiments of the invention are shown. The invention may, however, be embodied in different forms and should not be construed as limited to the embodiments set forth herein. Rather, these embodiments are provided so that this disclosure will be thorough and complete, and will fully convey the scope of the invention to those skilled in the art. Like reference numerals refer to like elements throughout.

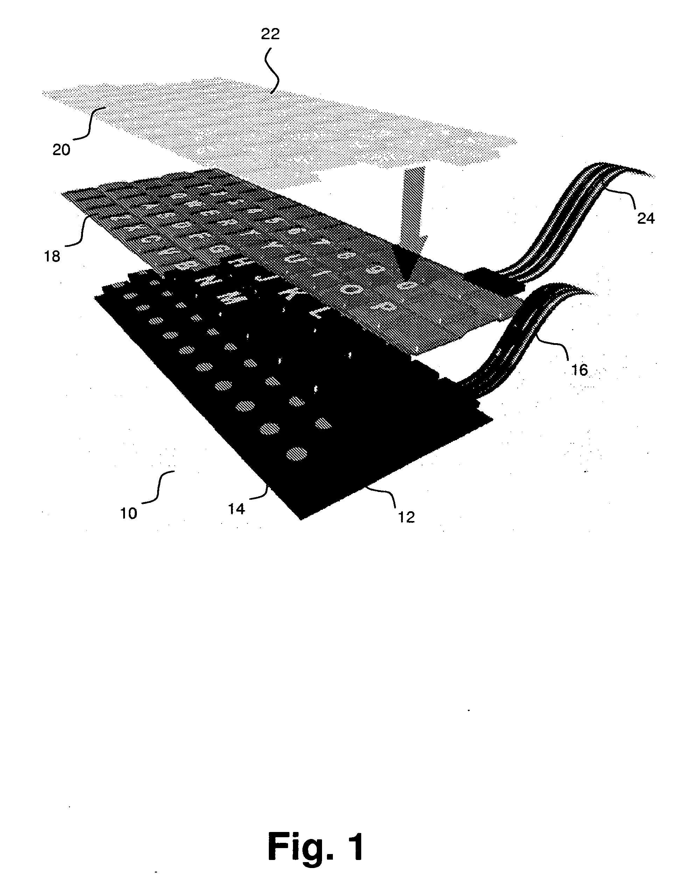

Fig. 1 shows an exploded view of the basic components of a keyboard 10 according to the present invention. The illustrated keyboard 10 comprises a printed circuit board 12 with key switches 14 arranged in a conventional computer keyboard array with five rows of key switches 14. Signal lines 16 are used to scan the key switches 14 to detect depressed key switches 14 as is well-known in the art. A flexible display 18 constituting upper parts of the keys is pre-shaped to fit on top of the key switches 14 and underneath the key caps 20. The top surfaces 22 of the key caps 20 are transparent so that the user can view the displayed key labels through the respective transparent key caps 20. Signal lines 24 are used to control the display 18.

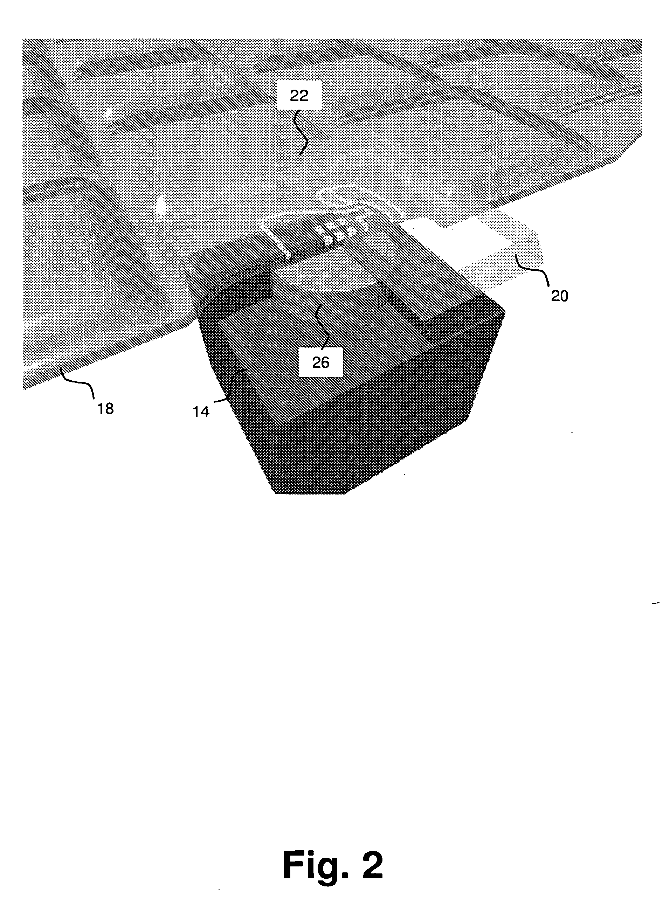

Fig. 2 illustrates in more detail one of the key switches 14 and the display 18 displaying a telephone symbol in the label of the key which label can be viewed through the transparent top surface 22 of the key cap 20.

In the illustrated embodiment, each key has a flat top surface that does not change its flat shape when the key is depressed similar to a conventional keyboard with individually depressible keys.

Each key switch 14 of the illustrated embodiment has a substantially non-flexible member 26 with a contact element (not visible). The non-flexible member 26 is arranged to be displaced when the corresponding key is depressed until contact between the contact element and an electric circuit of the keyboard is established. Contact is detected by a control circuit of the keyboard. The non-flexible member of the illustrated embodiment is biased with a coil spring in a way well-known from conventional keyboards.

The linear displacement of the keys preferably ranges from 1 mm to 5 mm, such as from 2 mm to 5 mm, for example app. 3.5 mm.

In this way, the tactile feed-back provided by the keyboard during use corresponds to the tactile feed-back well-known by the user from use of high quality conventional keyboards, for example in connection with a computer. Conventional high quality keyboards do not include dome switches or membrane switches. Instead, the desired tactile feedback generally perceived by the user as an indication of high quality is provided by displaceable members biased by spring means.

In a keyboard according to the present invention, the bias force provided by the spring means may be adjusted to compensate for the resilience of the flexible display so that the resulting bias force of each key experienced by the user is substantially similar to a value that is well-known by the user from conventional high quality keyboards.

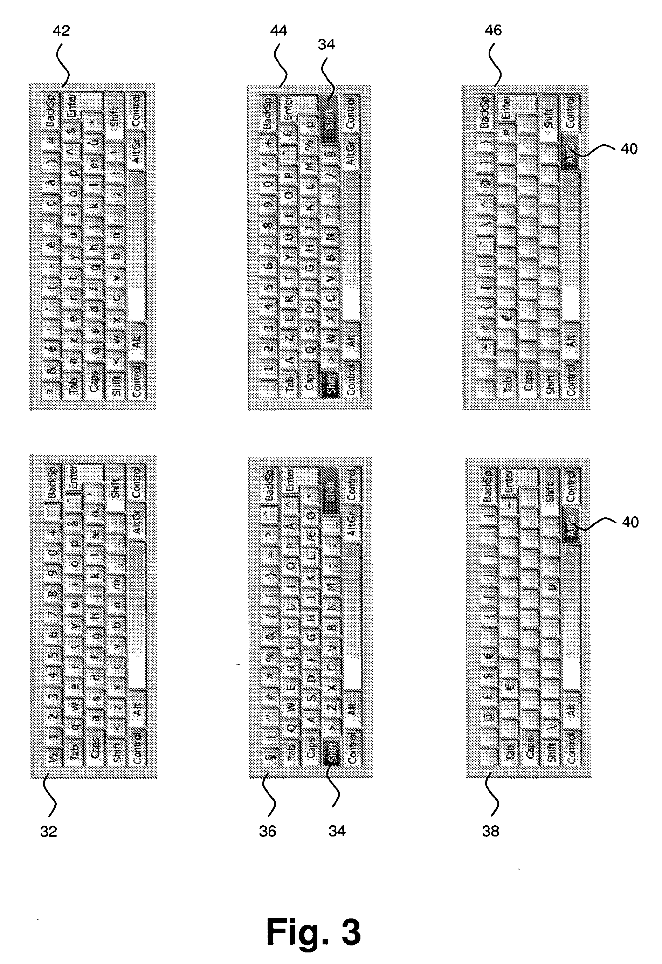

In Fig. 3, the lower row shows the keyboard according to the present invention used as a computer keyboard and displaying key labels in a way that corresponds to a conventional Danish computer keyboard. Image 32 shows the displayed lower case labels, including the Scandinavian vowels "æ", "ø", and "å", when the "Shift"-key 34 is not depressed. Image 36 shows the displayed upper case labels when the "Shift"-key 34 is depressed and likewise, image 38 shows the displayed labels when the "AltGr"-key 40 is depressed.

It should be noted that the keyboard according to the present invention simplifies user operation since the labels currently displayed indicate the current function of the respective keys in a clear and unambiguous way as opposed to conventional keyboards having some keys with three selectable symbols so that the user has to remember which other keys to activate to select one of the symbols of the key in question.

The upper row of Fig. 3 shows the keyboard according to the present invention used as a computer keyboard and displaying key labels in a way that corresponds to a conventional French computer keyboard. Image 42 shows the displayed lower case labels when the "Shift"-key 34 is not depressed. Image 44 shows the displayed upper case labels when the "Shift"-key 34 is depressed and likewise, image 46 shows the displayed labels when the "AltGr"-key 40 is depressed.

It is an important advantage of the present invention that one keyboard may be manufactured for all languages. Also, a person visiting a foreign country to work there can easily change the layout of the keyboard into his or her usual layout.

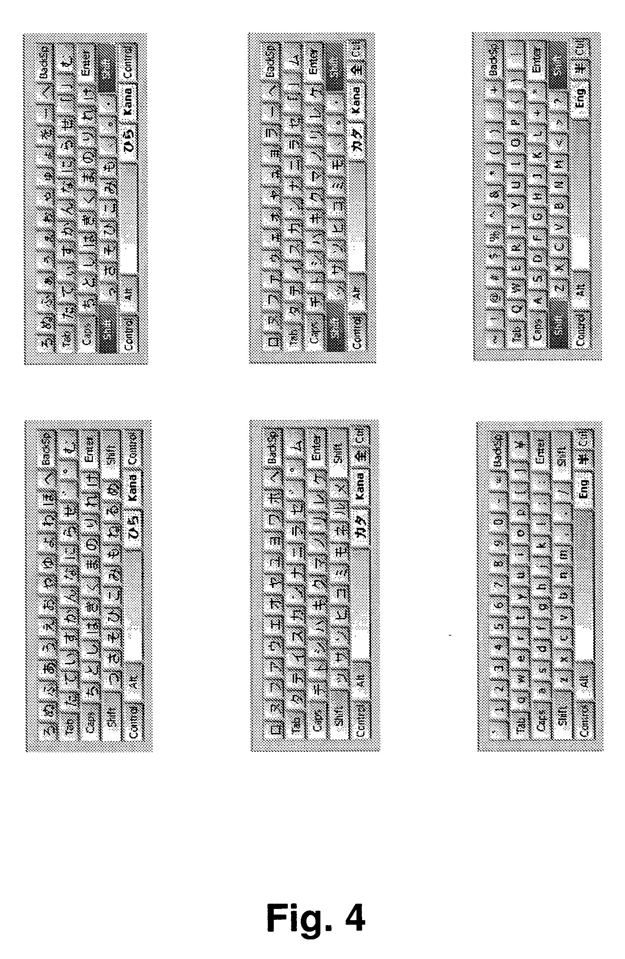

To further illustrate the versatility of the keyboard according to the present invention, Fig. 4 shows the keyboard displaying various typical keyboard layouts as used in Japan.

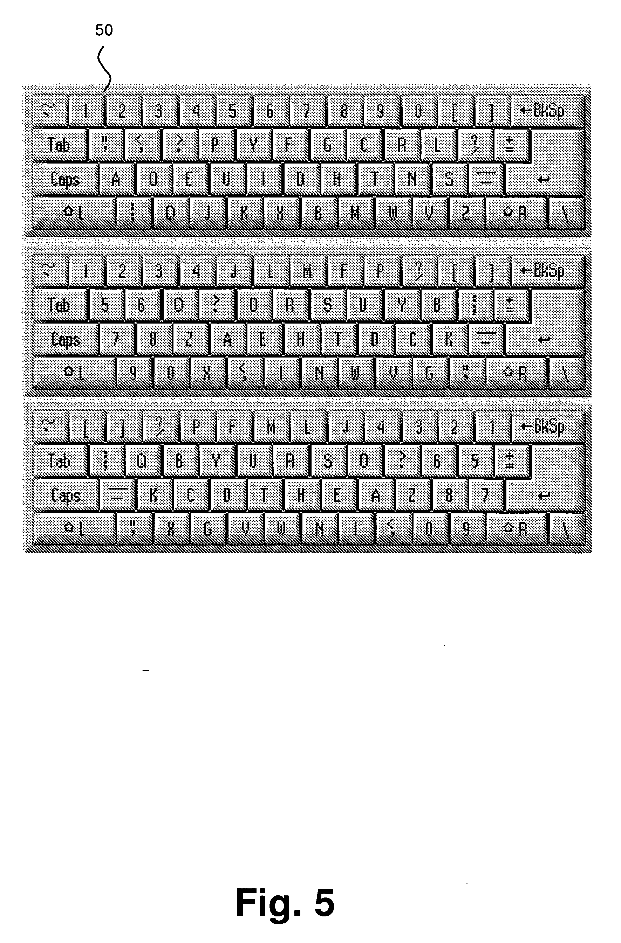

Fig. 5 shows the keyboard according to the present invention displaying the standard Dvorak layout 50. The Dvorak layout facilitates easy and fast keying since the five most used vowels and consonants (in English) are positioned in the row forming the starting position of the fingers of the user. A corresponding layout in other languages is easily provided by the keyboard according to the present invention. The middle layout is a right hand Dvorak layout, and the lower layout is a left hand Dvorak layout.

## Claims

1. A keyboard (10) with a plurality of keys with key switches (14) arranged in a computer keyboard array and covered by a flexible display (18) for displaying individual labels of the keys, and wherein
each key switch (14) of the plurality of keys has a substantially non-flexible member (26) with a contact element and wherein the non-flexible member is arranged to be displaced when the corresponding key is depressed until contact between the contact element and an electric circuit of the keyboard (10) is established, the linear displacement of the keys ranging from 1 mm to 5 mm,
**characterized in that**
the flexible display (18) is pre-shaped into a non-planar shape to fit on top of the key switches (14) so that each key switch (14) is activated by depressing the area of the flexible display (18) displaying the key label of the key switch (14) in question.

2. A keyboard (10) according to claim 1, wherein each of the plurality of keys further has a key cap (20) with a transparent top surface (22), and the flexible display (18) is mounted underneath the key caps (20) for displaying individual labels of the keys viewable through the transparent top surfaces (22) of the respective key caps (20).

3. A keyboard (10) according to claim 1 or 2, wherein the displaceable members are biased by spring means, and the bias force provided by the spring means is adjusted to compensate for the resilience of the flexible display (18).

4. A keyboard (10) according to any of the previous claims, wherein the display (18) is an OLED display.

5. A keyboard (10) according to any of the previous claims, wherein the display (18) is an electrophoretic display.

6. A keyboard (10) according to any of the previous claims, wherein the display (18) is an electro-wetting display.

7. A keyboard (10) according to any of the previous claims, wherein the display (18) is a polymer LCD display.

8. An apparatus with a processor that is connected to a keyboard (10) according to any of the preceding claims, and that is adapted to receive inputs from the keyboard (10) and to control the display (18) for displaying key labels in response to a user input.

9. An apparatus according to claim 8, wherein the processor is further adapted to control the flexible display (18) to display a conventional layout of lower case letters, numbers and other characters used in writing in a selected country and to change the labels into corresponding upper case letters, numbers, and other characters.

10. An apparatus according to claim 9, wherein the layout is a Dvorak layout.

11. An apparatus according to any of claims 8 - 10, wherein the layout is a layout of an alphabet selected from the group consisting of the European, Japanese, Arabic, Russian, and Chinese alphabet.

12. An apparatus according to any of claims 8 - 11, wherein the processor is further adapted to control the display (18) to display symbols indicating functions of function keys executed by a software program upon activation of the respective key.

13. An apparatus according to claim 12, wherein the software program is selected from the group consisting of a word processor, a game, a spreadsheet, a database, a CAD/CAM program.

14. An apparatus according to claim 12 or 13, wherein the processor is further adapted to control the display (18) to sequentially display certain key labels in a way that guides the user through a certain software program.

15. An apparatus according to any of claims 8 - 14, wherein the processor is adapted to execute an editor that allows the user to define the keyboard layout.

## Patentansprüche

1. Tastatur (10) mit mehreren Tasten mit Tastenschaltern (14), in einem Computertastaturarray angeordnet und von einem flexiblen Display (18) bedeckt zum Anzeigen von individuellen Etiketten der Tasten, und wobei jeder Tastenschalter (14) der mehreren Tasten ein im Wesentlichen inflexibles Glied (26) mit einem Kontaktelement aufweist und wobei das inflexible Glied so angeordnet ist, dass es verschoben wird, wenn die entsprechende Taste gedrückt wird, bis ein Kontakt zwischen dem Kontaktelement und einer elektrischen Schaltung der Tastatur (10) hergestellt wird, wobei die lineare Verschiebung der Schalter im Bereich zwischen 1 mm und 5 mm liegt,
**dadurch gekennzeichnet, dass** das flexible Display (18) in einer unplanaren Gestalt vorgeformt ist, um auf die Tastenschalter (14) zu passen, so dass jeder Tastenschalter (14) aktiviert wird, indem der Bereich des flexiblen Displays (18) gedrückt wird, der das Tastenetikett des fraglichen Tastenschalters (14) anzeigt.

2. Tastatur (10) nach Anspruch 1, wobei jede der mehreren Tasten weiterhin eine Tastekappe (20) mit einer transparenten oberen Oberfläche (22) aufweist und das flexible Display (18) unter den Tastenkappen (20) montiert ist zum Anzeigen von individuellen Etiketten der Tasten, die durch die transparenten oberen Oberflächen (22) der jeweiligen Tastenkappen (20) sichtbar sind.

3. Tastatur (10) nach Anspruch 1 oder 2, wobei die verschiebbaren Glieder durch Federmittel vorgespannt sind und die von den Federmitteln gelieferte Vorspannkraft justiert wird, um die Nachgiebigkeit des flexiblen Displays (18) zu kompensieren.

4. Tastatur (10) nach einem der vorhergehenden Ansprüche, wobei das Display (18) ein OLED-Display ist.

5. Tastatur (10) nach einem der vorhergehenden Ansprüche, wobei das Display (18) ein elektrophoretisches Display ist.

6. Tastatur (10) nach einem der vorhergehenden Ansprüche, wobei das Display (18) ein Elektrobenetzungsdisplay ist.

7. Tastatur (10) nach einem der vorhergehenden Ansprüche, wobei das Display (18) ein Polymer-LCD-Display ist.

8. Vorrichtung mit einem Prozessor, der mit einer Tastatur (10) gemäß einem der vorhergehenden Ansprüche verbunden ist und der dafür ausgelegt ist, Eingaben von der Tastatur (10) zu empfangen und das Display (18) zu steuern zum Anzeigen von Tastenetiketten als Reaktion auf eine Benutzereingabe.

9. Vorrichtung nach Anspruch 8, wobei der Prozessor weiterhin dafür ausgelegt ist, das flexible Display (18) zu steuern, ein herkömmliches Layout von Kleinbuchstaben, Zahlen und anderen Zeichen anzuzeigen, die beim Schreiben in einem ausgewählten Land verwendet werden, und die Etiketten in entsprechende Großbuchstaben, Zahlen und andere Zeichen zu ändern.

10. Vorrichtung nach Anspruch 9, wobei das Layout ein Dvorak-Layout ist.

11. Vorrichtung nach einem der Ansprüche 8-10, wobei das Layout ein Layout eines Alphabets ist, ausgewählt aus der Gruppe bestehend aus dem europäischen, japanischen, arabischen, russischen und chinesischen Alphabet.

12. Vorrichtung nach einem der Ansprüche 8-11, wobei der Prozessor weiterhin dafür ausgelegt ist, das Display (18) zu steuern, Symbole anzuzeigen, die Funktionen von Funktionstasten anzeigen, die von einem Softwareprogramm bei Aktivierung der jeweiligen Taste ausgeführt werden.

13. Vorrichtung nach Anspruch 12, wobei das Softwareprogramm ausgewählt ist aus der Gruppe bestehend aus einem Textverarbeitungsprogramm, einem Spiel, einer Tabellenkalkulation, einer Datenbank, einem CAD/CAM-Programm.

14. Vorrichtung nach Anspruch 12 oder 13, wobei der Prozessor weiterhin dafür ausgelegt ist, das Display (18) zu steuern, bestimmte Tastenetiketten sequenziell auf eine Weise anzuzeigen, die den Benutzer durch ein bestimmtes Softwareprogramm führt.

15. Vorrichtung nach einem der Ansprüche 8-14, wobei der Prozessor dafür ausgelegt ist, einen Editor auszuführen, der es dem Benutzer gestattet, das Tastaturlayout zu definieren.

## Revendications

1. Clavier (10) comportant une pluralité de touches avec des commutateurs de touches (14) agencés selon une matrice de clavier d'ordinateur et recouverts d'un dispositif d'affichage souple (18) pour afficher des symboles individuels des touches, et dans lequel chaque commutateur de touche (14) de la pluralité de touches comporte un élément sensiblement non souple (26) ayant un élément de contact et dans lequel l'élément non souple est agencé de façon à être déplacé lorsqu'on appuie sur la touche correspondante jusqu'à ce qu'un contact soit établi entre l'élément de contact et un circuit électrique du clavier (10), le déplacement linéaire des touches allant de 1 mm à 5 mm, **caractérisé en ce que**
le dispositif d'affichage souple (18) est préformé selon une forme non plane pouvant s'adapter à la partie supérieure des commutateurs de touches (14) afin que chaque commutateur de touche (14) soit activé par appui sur la zone de l'afficheur du dispositif d'affichage souple (18) affichant le symbole de touche du commutateur de touche (14) en question.

2. Clavier (10) selon la revendication 1, dans lequel chacune de la pluralité de touches comporte en outre un capuchon de touche (20) ayant une surface supérieure transparente (22), et dans lequel le dispositif d'affichage souple (18) est monté en dessous des capuchons de touche (20) pour afficher des symboles individuels des touches visibles à travers les surfaces supérieures transparentes (22) des capuchons de touche respectifs (20).

3. Clavier (10) selon la revendication 1 ou 2, dans lequel les éléments déplaçables sont sollicités par des moyens à ressorts et la force de rappel produite par les moyens à ressorts est ajustée de façon à compenser l'élasticité du dispositif d'affichage souple (18).

4. Clavier (10) selon l'une quelconque des revendications précédentes, dans lequel le dispositif d'affichage (18) est un dispositif d'affichage de type OLED.

5. Clavier (10) selon l'une quelconque des revendications précédentes, dans lequel le dispositif d'affichage (18) est un dispositif d'affichage électrophorétique.

6. Clavier (10) selon l'une quelconque des revendications précédentes, dans lequel le dispositif d'affichage (18) est un dispositif d'affichage à électromouillage.

7. Clavier (10) selon l'une quelconque des revendications précédentes, dans lequel le dispositif d'affichage (18) est un dispositif d'affichage à cristaux liquides polymères.

8. Appareil muni d'un processeur qui est connecté à un clavier (10) selon l'une quelconque des revendications précédentes, et qui est apte à recevoir des entrées du clavier (10) et à commander le dispositif d'affichage (18) afin d'afficher des symboles de touches en réponse à une entrée de l'utilisateur.

9. Appareil selon la revendication 8, dans lequel le processeur est en outre apte à commander le dispositif d'affichage souple (18) afin d'afficher un agencement classique de lettres minuscules, de nombres et d'autres caractères utilisés pour écrire dans un pays sélectionné et pour transformer les symboles en des lettres majuscules correspondantes, des nombres et autres caractères.

10. Appareil selon la revendication 9, dans lequel l'agencement est un agencement Dvorak.

11. Appareil selon l'une quelconque des revendications 8 à 10, dans lequel l'agencement est un agencement d'un alphabet sélectionné dans le groupe constitué des alphabets européen, japonais, arabe, russe et chinois.

12. Appareil selon l'une quelconque des revendications 8 à 11, dans lequel le processeur est en outre apte à commander le dispositif d'affichage (18) afin d'afficher des symboles indiquant des fonctions de touches de fonctions exécutées par un logiciel lors de l'activation de la touche respective.

13. Appareil selon la revendication 12, dans lequel le logiciel est sélectionné dans le groupe constitué d'un traitement de texte, d'un jeu, d'un tableur, d'une base de données, d'un programme de CAO/FAO.

14. Appareil selon la revendication 12 ou 13, dans lequel le processeur est en outre apte à commander le dispositif d'affichage (18) de façon à afficher séquentiellement certains symboles de touches d'une manière qui guide l'utilisateur à travers un certain logiciel.

15. Appareil selon l'une quelconque des revendications 8 à 14, dans lequel le processeur est apte à exécuter un éditeur qui permet à l'utilisateur de définir la configuration du clavier.
